# EUROPÄISCHE PATENTSCHRIFT

(11) **EP 0 748 119 B1**
(45) Veröffentlichungstag und Bekanntmachung des Hinweises auf die Patenterteilung: **16.08.2001**
(21) Anmeldenummer: 96106807.9
(22) Anmeldetag: 30.04.1996
(51) Int. Cl.: H04N 7/173

(54) **Verfahren zur Realisierung von interaktivem Fernsehen**
Method for providing interactive television
Procédé pour la réalisation de télévision interactive

(30) Priorität: 06.06.1995 DE 19520601
(43) Veröffentlichungstag der Anmeldung: 11.12.1996
(73) Patentinhaber: GRUNDIG Aktiengesellschaft, 90471 Nürnberg (DE)
(72) Erfinder: Ruelberg, Klaus, Dr.-Ing., Grundig E.M.V., 90762 Fürth (DE)

(56) Entgegenhaltungen:
- WO-A-94/13107
- WO-A-95/12275

## Beschreibung

Die Erfindung betrifft ein Verfahren mit den im Oberbegriff des Anspruchs 1 angegebenen Merkmalen.

Derzeit erfolgt in der Fernsehtechnik der Übergang von analogen zu digitalen Übertragungssystemen. In diesem Zusammenhang wird auch die Satelliten- und Kabelübertragung umgestellt. Mittels eines Quellencodierverfahrens nach dem MPEG-Standard ist eine Datenkompression möglich, die eine besonders effiziente Übertragung zuläßt. Während in der analogen Technik auf einem Satellitentransponder von beispielsweise 33 MHz Bandbreite bisher ein Fernsehprogramm übertragen wird, ist mit der digitalen Technik eine Verteilung von 5 - 10 Programmen gleicher Qualität auf dem gleichen Transponder möglich.

Diese Vielfalt von Programmen erfordert einen Multiplex mit geeigneter Verwaltung der Daten. Auch dieser Aspekt ist im MPEG-Standard geregelt. Dazu ist vorgesehen, die Datenströme in Blöcke aufzuteilen, die im Zeitmultiplex übertragen werden. Ein Programm besteht aus mehreren Datenströmen unterschiedlicher Art (Videoinformation, Audioinformation, Hilfsinformation), den sogenannten elementaren Datenströmen. Die elementaren Datenströme eines Programms werden in einem Programmultiplexer zu einem Programmdatenstrom zusammengefügt. Verschiedene Programmdatenströme werden in einem Transportmultiplexer zum Transportdatenstrom zusammengesetzt. Die einzelnen Datenblöcke, die beispielsweise eine Länge von 188 Bytes haben können, sind jeweils mit Synchronisations- und Identifikationsbytes versehen, um dem Empfänger die die Auswahl der richtigen Blöcke zur Decodierung und Darstellung der Information auf einem Fernsehempfänger zu ermöglichen.

Aus WO 95/12275 ist ein Abspielsystem für Datenträger bekannt. Diese System ermöglicht es unterschiedliche Versionen eines gleichen Spielfilmes, welcher auf einem Speichermedium gespeichert ist, in Abhängigkeit verschiedener Parameter abzuspielen. Es soll insbesondere durch die Erfindung ermöglicht werden redundante Daten nur einmal zu speichern. Auf diese Weise ist es möglich die Audio-Daten von den Video-Daten zu trennen und somit einen Spielfilm in zwei Sprachen auf einem Datenträger zu speichern, wobei Ton und Bild beim Abspielen gemischt werden. Eine Interaktion in den Ablauf eines Filmes, ermöglicht diese Erfindung jedoch nicht.

Aus WO94/13107 ist eine Set-Top-Box bekannt, welche zum Einsatz in einem Kabelnetz dient. Diese Set-Top-Box ist in der Lage einen Datenstrom in Grafik-und Textanteile zu spalten. Es sind im weiteren Mittel vorgesehen um Grafik und Text später wieder zusammen zu fügen. Schließlich ist diese Box in der Lage Menuedarstellungen zu generieren. Auch bei dieser Erfindung ist eine Interaktion in den Ablauf eines Filmes, nicht möglich.

Die Aufgabe der Erfindung besteht darin, ein neues Verfahren zur Realisierung von interaktivem Fernsehen anzugeben.

Diese Aufgabe wird bei einem Verfahren mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Patentansprüchen .

Die Vorteile der Erfindung bestehen insbesondere darin, daß es dem Zuschauer ermöglicht wird, an bestimmten Stellen eines Filmes auf den weiteren Verlauf bzw. den Ausgang des Filmes Einfluß zu nehmen. Weitere Vorteile der Erfindung ergeben sich aus der Erläuterung eines Ausführungsbeispiels anhand der Figuren.

Es zeigt:
- die Figur 1: ein Zeitdiagramm zur Erläuterung des beanspruchten Verfahrens und
- die Figur 2: ein Blockschaltbild zur Erläuterung eines Empfängers.

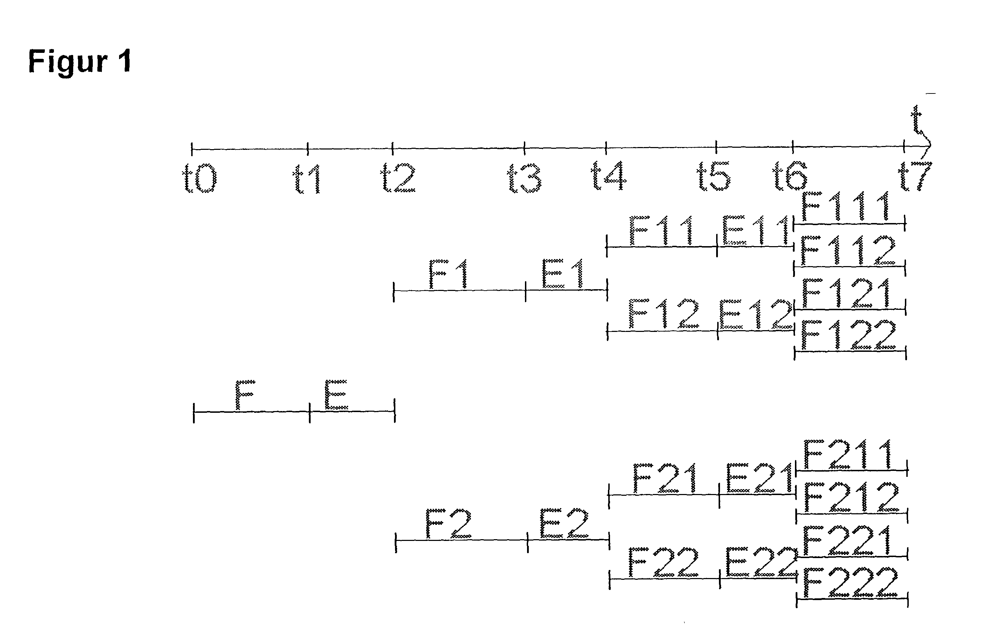

Die Figur 1 zeigt ein Zeitdiagramm zur Erläuterung des beanspruchten Verfahrens. Im oberen Teil der Figur 1 ist eine Zeitachse gezeigt, auf der die Zeitpunkte tₒ - t₇ markiert sind. Zum Zeitpunkt tₒ beginnt die Übertragung von Fernsehsignalen, die einer vom Benutzer angewählten Fernsehsendung entsprechen. Bei dieser Fernsehsendung handelt es sich beipielsweise um einen Spielfilm. Diese Fernsehsignale werden in einem Fernsehsender erzeugt und enthalten Zusatzsignale, deren Funktion unten näher erläutert wird. Im folgenden wird davon ausgegangen, daß die genannten Fernsehsignale nach dem MPEG2-Standard codiert sind und in Form eines Transportdatenstromes über eine Satellitenübertragungsstrecke auf die Empfangsseite übertragen werden. Empfangsseitig erfolgt eine Darstellung der Fernsehsignale auf einem Bildschirm.

Zwischen dem Zeitpunkt tₒ und dem Zeitpunkt t₁ wird ein erster Teil F des Spielfilms auf dem Bildschirm dargestellt. Ist der Zeitpunkt t₁ erreicht, dann erfolgt sendergesteuert im Zeitintervall von t₁ bis t₂ eine Darstellung einer Menueseite E auf dem Bildschirm, welche eine Übersicht über mögliche Fortsetzungsvarianten des Spielfilms enthält. Die der Menueseite entsprechenden Signale werden im genannten Transportdatenstrom zusammen mit den Fernsehsignalen auf die Empfangsseite übertragen.

Auf der genannten Menueseite wird beispielsweise angezeigt, daß eine erste mögliche Fortsetzungsvariante darin besteht, daß der nächste Teil des Spielfilms sich im Gebirge abspielt, und daß eine zweite mögliche Fortsetzungsvariante des Spielfilms darin besteht, daß der nächste Teil des Spielfilms sich am Meer abspielt. Gleichzeitig erfolgt in einer Benutzerführungszeile am unteren Bildschirmrand eine Aufforderung an den Benutzer, sich für eine der beiden Varianten zu entscheiden. Diese Entscheidung erfolgt dadurch, daß entweder mittels der Bedieneinheit des Empfängers eine der jeweiligen Variante zugeordnete Ziffer eingegeben wird oder mittels der Cursortasten der Bedieneinheit eine Anwahl der gewünschten Variante auf dem Bildschirm erfolgt.

Weiterhin enthält der Transportdatenstrom Verzweigungsinformationen, d.h. Hilfssignale, die nicht auf dem Bildschirm dargestellt werden, aber vom Empfänger zur Fortsetzung der Betrachtung benötigt werden. So geben diese Hilfssignale, die im Empfänger mittels eines Demultiplexers aus dem Transportdatenstrom abgetrennt und der Steuerschaltung des Empfängers zugeführt werden, unter anderem Auskunft darüber, mit welcher Kennung die den jeweiligen Fortsetzungsvarianten entspechenden Fernsehsignale übertragen werden, so daß der Empfänger nach Auswertung der Hilfssignale und der Eingabe durch den Benutzer in der Lage ist, die der ausgewählten Fortsetzungsvariante entsprechenden Fernsehsignale aus dem Transportdatenstrom abzutrennen.

Ferner geben die Hilfssignale der Steuerschaltung des Empfängers Auskunft darüber, welche der Fortsetzungsvarianten er verwenden soll, wenn innerhalb des genannten Zeitintervalls von t₁ bis t₂ keine Interaktion durch den Benutzer erfolgt. Alternativ hierzu ist es auch möglich, diese automatische Fortsetzung nach Ablauf des genannten Zeitintervalls ausschließlich empfängerseitig durchzuführen, beispielsweise dadurch, daß stets die erste von verschiedenen Fortsetzungsvarianten automatisch ausgewählt wird.

Auf die vorstehend beschriebene Weise erfolgt in der Zeit zwischen t₂ und t₃ entweder eine Bildschirmdarstellung der der Fortsetzungsvariante F1 oder der Fortsetzungsvariante F2 entsprechenden Signale. Diese Signale werden senderseitig erzeugt und im Zeitmultiplex innerhalb des Transportdatenstroms über die Satellitenübertragungsstrecke auf die Empfangsseite übertragen.

Im darauffolgenden Zeitintervall von t₃ bis t₄ erfolgt wiederum eine sendergesteuerte Darstellung einer Menueseite E1, falls die Fortsetzungsvariante F1 gewählt wurde, oder einer Menueseite E2, falls die Fortsetzungsvariante F2 gewählt wurde. Diese Menueseiten E1 und E2 enthalten eine Übersicht über mögliche Fortsetzungsvarianten F11 und F12 bzw. F21 und F22. Weiterhin erfolgt auch hier in einer Benutzerführungszeile am unteren Bildschirmrand eine Aufforderung an den Benutzer, sich für eine der angebotenen Varianten zu entscheiden.

Im Zeitintervall von t₄ bis t₅ erfolgt dann - je nach Auswahl - eine Darstellung der Fernsehsignale, die der ausgewählten Fortsetzungsvariante F11, F12, F21 oder F22 entsprechen.

Danach wird im Zeitintervall von t₅ bis t₆ wiederum eine Menueseite E11, E12, E21 oder E22 angezeigt, um dem Benutzer die Möglichkeit zu geben, erneut den Verlauf des Filmes mitzubestimmen.

Schließlich erfolgt im Zeitintervall von t₆ bis t₇ eine Darstellung des Schlußteils des Films in Abhängigkeit von der Interaktion durch den Benutzer.

Bei dem vorstehend beschriebenen interaktiven Fernsehsystem wid dem Benutzer senderseitig die Möglichkeit gegeben, an bestimmten Stellen Einfluß auf den weiteren Verlauf des Films zu nehmen. Dazu ist es selbstverständlich notwendig, daß der Sender nach Ablauf der Entscheidungsintervalle mehrere im Transportdatenstrom übertragene Fortsetzungsvarianten des Films ausstrahlt.

Das beschriebene interaktive Fernsehsystem ist nicht nur zur Übertragung von Spielfilmen geeignet, sondern kann beispielsweise auch zur Realisierung von Werbesendungen verwendet werden, bei welchen dem Benutzer die Möglichkeit gegeben werden soll, Verzweigungen nach seinen individuellen Interessen vorzunehmen.

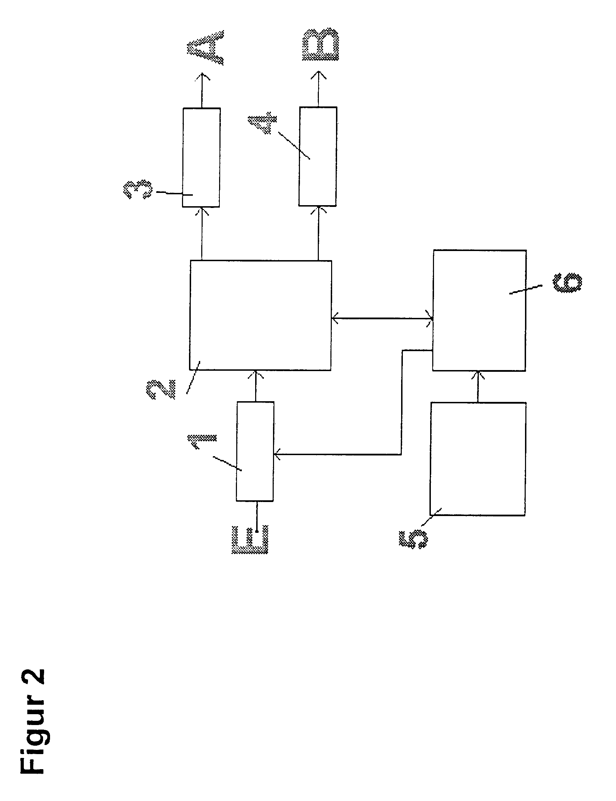

Die Figur 2 zeigt ein Blockschaltbild zur Erläuterung der zum Verständnis der Erfindung wesentlichen Bestandteile eines Empfängers zum Empfang von Signalen, die nach dem beanspruchten Verfahren übertragen werden. Dieser Empfänger kann in Form einer Set-Top-Box realisiert oder auch in das Gehäuse eines üblichen Fernsehempfängers integriert sein.

Bei der nachfolgenden Beschreibung wird davon ausgegangen, daß das zur Übertragung der Signale verwendete Übertragungsmedium eine Satellitenübertragungsstrecke ist und am Eingang E des in der Figur 2 gezeigten Empfängers ein von einer Satellitenantenne empfangenes und in eine Satelliten-Zwischenfrequenzlage umgesetztes Signal vorliegt. Dieses Signal wurde senderseitig MPEG2-codiert und enthält einen Transportdatenstrom, welcher im Zeitmultiplex Fernsehsignalblöcke, Tonsignalblöcke und Hilfssignalblöcke überträgt.

Dieses Signal wird einem Empfangsteil zugeführt, welches eine Empfangsschaltung 1 und einen Demultiplexer 2 aufweist. Die Empfangsschaltung 1 enthält einen Tuner, einen QPSK-Demodulator und eine Fehlerkorrekturschaltung. Mittels dieser Empfangsschaltung 1 wird das in der Satelliten-Zwischenfrequenzlage vorliegende Eingangssignal in Signale umgewandelt, die dem senderseitig erzeugten Transportdatenstrom entsprechen. Dieser Transportdatenstrom enthält unter anderem Daten, die einem Spielfilm zugeordnet sind.

Zum Empfang des genannten Spielfilms wird zunächst mittels einer Stationstaste der Bedieneinheit 5 der gewünschte Transportdatenstrom angewählt. Dieses Bediensignal wird von der Bedieneinheit 5 dem Mikrocomputer 6 zugeführt. Der Mikrocomputer 6 führt dem in der Empfangsschaltung 1 angeordneten Tuner ein Steuersignal zu, aufgrund dessen der Tuner zum Empfang der dem gewünschten Transportdatenstrom entsprechenden, in der Satelliten-Zwischenfrequenzlage vorliegenden Signale abgestimmt wird. Die Ausgangssignale des Tuners werden über den QPSK-Demodulator und die Fehlerkorrekturschaltung geleitet, um den gewünschten Transportdatenstrom zur Verfügung zu stellen. Dieser wird dem Demultiplexer 2 zugeleitet.

Im Demultiplexer 2 werden aus dem Transportdatenstrom die Hilfssignale abgeleitet und dem Mikrocomputer 6 zur Auswertung zugeführt. Die Hilfssignale enthalten Informationen über den Inhalt der im Transportdatenstrom enthaltenen Fernseh- und Tonsignalblöcke sowie über deren inhaltliche Verknüpfung. Ferner enthalten die Hilfssignale Markierungen, die mit den Fernseh- und Tonsignalen zeitlich korreliert sind. Diese Informationen werden vom Mikrocomputer 6 benötigt, um - wie oben beschrieben wurde - nach dem Ablauf der Entscheidungs-Zeitintervalle die Empfangsschaltung zur Auswahl einer der Fortsetzungsvarianten ansteuern zu können.

Im Demultiplexer 2 werden weiterhin unter Steuerung durch den Mikrocomputer 6 aus dem Transportdatenstrom die dem gewünschten Programmdatenstrom entsprechenden Signalblöcke abgetrennt. Die Bildsignalblöcke werden im MPEG2-Decoder 3 decodiert und an einem Ausgang A zur Verfügung gestellt. Die Tonsignalblöcke werden im MPEG2-Decoder 4 decodiert und an einen Ausgang B weitergeleitet.

Von dort aus werden die Signale in bekannter Weise weiterverarbeitet und über den Bildschirm bzw. die Lautsprecher des Fernsehempfängers wiedergegeben.

Während der in der Figur 1 gezeigten Entscheidungsintervalle E, E1, E2, E11, E12, E21 und E22 erfolgt - wie oben beschrieben - auf dem Bildschirm die Darstellung einer Menueseite, welche eine Aufforderung an den Benutzer enthält, sich für eine der angebotenen Varianten zu entscheiden. Um eine derartige Darstellung zu ermöglichen, ist in den MPEG2-Decoder 3 eine grundsätzlich bekannte on-screen-display-Schaltung integriert.

Nach dem Ende der Entscheidungszeitintervalle steuert der Mikrocomputer 6 in Ansprache auf die mittels der Bedieneinheit 5 getätigte Benutzerinteraktion und unter Berücksichtigung der ihm zugeführten Verzweigungsinformationen die Empfangsschaltung 1 und den Demultiplexer 2 derart an, daß die der gewünschten Fortsetzungsvariante entsprechenden Bild- und Tonsignale über die MPEG2-Decoder 3 und 4 an die Endstufen des Fernsehempfängers weitergeleitet werden.

Unterbleibt während der genannten Entscheidungszeitintervalle eine Interaktion des Benutzers, dann steuert der Mikrocomputer 6 die Empfangsschaltung 1 und den Demultiplexer 2 derart an, daß automatisch entweder eine vom Sender vorgegebene und in den Verzweigungsinformationen gekennzeichnete Fortsetzungsvariante oder eine durch die Programmierung des Mikrocomputers 6 selbst vorgegebene Fortsetzungsvariante ausgewählt wird.

## Patentansprüche

1. Verfahren zur Realisierung von interaktivem Fernsehen, bei welchem senderseitig einer Fernsehsendung entsprechende Fernsehsignale erzeugt werden, die Zusatzsignale enthalten, die Fernsehsignale und die Zusatzsignale über eine Übertragungsstrecke übertragen werden und empfangsseitig eine Darstellung der Fernsehsignale auf einem Bildschirm erfolgt,
**dadurch gekennzeichnet, daß**
- die Zusatzsignale Verzweigungsinformationen enthalten, die eine Auswahl einer von verschiedenen Fortsetzungsvarianten der Fernsehsendung ermöglichen,
- sendergesteuert für ein vorgegebenes Zeitintervall eine Menueseite zur Auswahl einer der Fortsetzungsvarianten auf dem Bildschirm dargestellt wird,
- eine Auswahl einer der Fortsetzungsvarianten durch den Benutzer über die empfängerseitig dargestellte Menueseite durch Eingabe über eine Bedieneinheit, welche dem Bildschirm zugeordnet ist, erfolgt,
- nach dem Ablauf des vorgegebenen Zeitintervalles senderseitig sämtliche Fortsetzungsignale erzeugt werden, die den verschiedenen Fortsetzungsvarianten der Fernsehsendung nebst zugehörigen Zusatzsignalen entsprechen,
- alle Fortsetzungsignale auf die Empfangsseite übertragen werden, und
- eine Bildschirmdarstellung der Fortsetzungssignale der ausgewählten Fortsetzungsvariante erfolgt.

2. Verfahren nach Anspruch 1,
**dadurch gekennzeichnet, daß**
bei unterbliebener manueller Auswahl einer Fortsetzungsvariante innerhalb des vorgegebenen Zeitintervalles nach Ablauf des Zeitintervalles automatisch eine der Fortsetzungsvarianten ausgewählt wird.

3. Verfahren nach Anspruch 2,
**dadurch gekennzeichnet, daß**
die automatische Auswahl sendergesteuert erfolgt.

4. Verfahren nach Anspruch 2,
**dadurch gekennzeichnet, daß**
die automatische Auswahl ausschließlich empfangsseitig durchgeführt wird.

5. Empfänger zur Durchführung der empfangsseitigen Verfahrensschritte des Verfahrens nach einem der Ansprüche 1 bis 4, wobei
der Empfänger einen Tuner (1), einen Demultiplexer (2), eine Bedieneinheit (5) und eine Steuerschaltung (6) aufweist, **dadurch gekennzeichnet, daß** die Steuerschaltung (6) derart ausgestaltet ist, daß sie in Ansprache auf eine als Zusatzsignal im Empfangssignal enthaltene
Verzweigungsinformation zur Auswahl einer von verschiedenen Fortsetzungsvarianten einer Fernsehsendung und einen mittels der Bedieneinheit (5) eingegebenen Bedienbefehl zur Auswahl den Tuner (1) und den Demultiplexer (2) zum Empfang eines der ausgewählten Fortsetzungsvariante entsprechenden Fernsehbeitrages ansteuert.

## Claims

1. Method of implementing interactive television in which television signals are generated at the transmitter end that correspond to a television broadcast and that contain additional signals, the television signals and the additional signals are transmitted via a transmission path and the television signals are displayed on a picture screen at the receiving end,
characterized in that
- the additional signals contain items of branching information that make possible a selection of different continuation variants of the television broadcast,
- a menu page for selecting one of the continuation variants on the picture screen is displayed under transmitter control for a specified time interval,
- one of the continuation variants is selected by the user by means of the menu page displayed at the receiver end by an input via a control unit that is assigned to the picture screen,
- after the specified time interval has elapsed, all the continuation signals are generated at the transmitter end that correspond to the various continuation variants of the television broadcast in addition to associated additional signals,
- all the continuation signals are transmitted to the receiving end, and
- a picture screen display of the continuation signals of the selected continuation variant takes place.

2. Method according to Claim 1,
characterized in that
if the selection of a continuation variant is outstanding within the specified time interval, one of the continuation variants is automatically selected after the time interval has elapsed.

3. Method according to Claim 2,
characterized in that
the automatic selection takes place under transmitter control.

4. Method according to Claim 2,
characterized in that
the automatic selection is performed exclusively at the receiving end.

5. Receiver for performing the method steps at the receiver end of the method according to one of Claims 1 to 4, wherein the receiver has a tuner (1), a demultiplexer (2), an operating unit (5) and a control circuit (6), characterized in that the control circuit (6) is designed in such a way that, in response to an item of branching information that is contained in the received signal as an additional signal and is intended for selecting one of various continuation variants of a television broadcast, and to an operating command entered by means of the operating unit (5), it activates the tuner (1) and the demultiplexer (2) to receive a television item corresponding to the selected continuation variant.

## Revendications

1. Procédé pour réaliser une télévision interactive, selon lequel des signaux de télévision correspondant à une émission de télévision sont produits côté émetteur, ces signaux contenant des signaux supplémentaires, les signaux de télévision et les signaux supplémentaires sont transmis par l'intermédiaire d'une voie de transmission, et une représentation des signaux de télévision sur un écran est exécutée côté réception,
caractérisé en ce que
- les signaux supplémentaires contiennent des informations de branchement qui permettent de sélectionner différentes variantes de continuation de l'émission de télévision,
- une tâche de menu pour sélectionner l'une des variantes de continuation est représentée sur l'écran, d'une manière commandée à partir de l'émetteur, pendant un intervalle de temps prédéterminé,
- une sélection de l'une des variantes de continuation est réalisée par l'utilisateur au moyen de la page de menu présentée côté récepteur, par introduction au moyen d'une unité de commande, qui est associée à l'écran,
- après l'écoulement de l'intervalle de temps prédéterminé, côté émetteur tous les signaux de continuation sont produits, signaux qui correspondent aux différentes variantes de continuation de l'émission de télévision en dehors de signaux supplémentaires associés,
- tous les signaux de continuation sont transmis au côté récepteur, et
- une représentation, sur l'écran, des signaux de continuation de la variante de continuation sélectionné est présentée sur l'écran.

2. Procédé selon la revendication 1, caractérisé en ce que
dans le cas d'une sélection manuelle interrompue d'une variante de continuation dans les limites de l'intervalle de temps prédéterminé, l'une des variantes de continuation est sélectionnée automatiquement après écoulement de l'intervalle de temps.

3. Procédé selon la revendication 2, caractérisé en ce que
la sélection automatique s'effectue d'une manière commandée côté émetteur.

4. Procédé selon la revendication 2, caractérisé en ce que
la sélection automatique est exécutée exclusivement côté réception.

5. Récepteur pour la mise en oeuvre des étapes opératoires, côté réception, du procédé selon l'une des revendications 1 à 4, dans lequel le récepteur contient un circuit de réglage d'accord (1), un démultiplexeur (2), une unité de commande (5) et un circuit de commande (6), caractérisé en ce que le circuit de commande (6) est agencé de telle sorte qu'en réponse à une information de branchement contenue en tant que signal supplémentaire dans le signal de réception, pour la sélection d'une instruction de commande de sélection, et d'une instruction de commande introduite au moyen de l'unité de commande (5), le circuit de commande commande le dispositif de réglage d'accord (1) et le démultiplexeur (2) pour la réception de l'émission de télévision correspondant à la variante de continuation sélectionnée.
